(19) Europäisches Patentamt
European Patent Office
Office européen des brevets

(11) **EP 3 156 972 A1**

(12) **EUROPEAN PATENT APPLICATION**

(43) Date of publication:
**19.04.2017 Bulletin 2017/16**

(51) Int Cl.:
***G06T 7/254*** (2017.01)   ***G06K 9/00*** (2006.01)

(21) Application number: **16191378.5**

(22) Date of filing: **29.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.10.2015 CN 201510671537**

(71) Applicant: **FUJITSU LIMITED**
**Kawasaki-shi Kanagawa 211-8588 (JP)**

(72) Inventor: **Wang, Bingrong**
**Beijing, 100027 (CN)**

(74) Representative: **Hoffmann Eitle**
**Patent- und Rechtsanwälte PartmbB**
**Arabellastraße 30**
**81925 München (DE)**

(54) **COUNTING APPARATUS AND METHOD FOR MOVING OBJECTS**

(57)    Embodiments of the present disclosure provide a counting apparatus and method for moving objects. By calculating the number of moving objects in each region based on linear regression, calculating the number of increased moving objects in each region according to the undirected graphs built based on optical flows, and counting according to the number of the moving objects and the number of the increased moving objects in each region, repeated counting may be avoided, and fast and accurate real-time counting may be achieved.

1401 — Images having moving objects are extracted

1402 — Background modeling is performed on the extracted images, to obtain binarized images

1403 — Group segmentation is performed on the binarized images

1404 — Features of each region after the group segmentation are calculated according to preobtained scaling parameters

1405 — The number of moving objects in each region is calculated according to the features of each region and preobtained linear regression coefficients

1406 — The number of increased moving objects in each region is calculated according to undirected graphs built based on optical flows

1407 — The number of moving objects in the images is determined according to the number of moving objects and the number of increased moving objects in each region

FIG. 14

EP 3 156 972 A1

## Description

Technical Field

The present disclosure relates to the field of information technologies, and in particular to a counting apparatus and method for moving objects.

Background

As the continuous development of the information technologies, it is a technique having application expectations to count moving objects, such as pedestrians or vehicles, by using surveillance videos, to be applied to traffic control, smart surveillance, or statistics of stream of vehicles or stream of customers. Existing counting techniques usually fall into three categories: counting based on detection, counting based on clustering, and counting based on regression.

In counting based on detection, an entity of a moving object is detected by using a trained detector to scan an image space. In counting based on clustering, a crowd is assumed to be composed of individuals, each of which has unique coherent motion patterns that can be cluttered, to approximate the number of moving objects. Counting based on regression aims to obtain direct mappings between low-level features without segregation or tracking of individuals.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

Summary

When the existing method of counting based on detection is used, the detection process is time-consuming, and the detection is easy to fail in scenes with crowded moving objects; when the existing method of counting based on clustering is used, the approach requires sufficiently high video frame rate, and missing is easy to occur in scenes with crowded moving objects; and when the existing method of counting based on regression is used, single-frame video images can only be counted.

Embodiments of the present disclosure provide a counting apparatus and method for moving objects, in which by calculating the number of moving objects in each region based on linear regression, calculating the number of increased moving objects in each region according to the undirected graphs built based on optical flows, and counting according to the number of the moving objects and the number of the increased moving objects in each region, repeated counting may be avoided, and fast and accurate real-time counting may be achieved.

According to a first aspect of embodiments of the present disclosure, there is provided a counting apparatus for moving objects, including: a first extracting unit configured to extract images having moving objects; a first modeling unit configured to perform background modeling on extracted images, to obtain binarized images; a first segmenting unit configured to perform group segmentation on the binarized images; a first calculating unit configured to calculate features of each region after the group segmentation according to preobtained scaling parameters; a second calculating unit configured to calculate the number of moving objects in each region according to the features of each region and preobtained linear regression coefficients; a third calculating unit configured to calculate the number of increased moving objects in each region according to undirected graphs built based on optical flows; and a first determining unit configured to determine the number of moving objects in the images according to the number of moving objects and the number of increased moving objects in each region.

According to a second aspect of embodiments of the present disclosure, there is provided a counting method for moving objects, including: extracting images having moving objects; performing background modeling on extracted images, to obtain binarized images; performing group segmentation on the binarized images; calculating features of each region after the group segmentation according to preobtained scaling parameters; calculating the number of moving objects in each region according to the features of each region and preobtained linear regression coefficients; calculating the number of increased moving objects in each region according to undirected graphs built based on optical flows; and determining the number of moving objects in the images according to the number of moving objects and the number of increased moving objects in each region.

An advantage of the embodiments of the present disclosure exists in that by calculating the number of moving objects in each region based on linear regression, calculating the number of increased moving objects in each region according to the undirected graphs built based on optical flows, and counting according to the number of the moving objects and the number of the increased moving objects in each region, repeated counting may be avoided, and fast and accurate real-time counting may be achieved.

With reference to the following description and drawings, the particular embodiments of the present disclosure are disclosed in detail, and the principles of the present disclosure and the manners of use are indicated. It should be understood that the scope of embodiments of the present disclosure is not limited thereto. Embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of the present disclosure only, and a person of ordinary skill in the art may obtain other accompanying drawings according to these accompanying drawings without making an inventive effort. In the drawings:

FIG. 1 is a schematic diagram of a structure of the counting apparatus for moving objects of Embodiment 1 of the present disclosure;

FIG. 2 is a schematic diagram of a structure of a first segmenting unit 103 of Embodiment 1 of the present disclosure;

FIG. 3 is a flowchart of a method for performing group segmentation on binarized images of Embodiment 1 of the present disclosure;

FIG. 4 is a schematic diagram of performing group segmentation on the binarized images of Embodiment 1 of the present disclosure;

FIG. 5 is a schematic diagram of from extracting images to performing group segmentation on the images of Embodiment 1 of the present disclosure;

FIG. 6 is a schematic diagram of a structure of a third calculating unit 106 of Embodiment 1 of the present disclosure;

FIG. 7 is a flowchart of a method for calculating the number of increased moving objects in each region of Embodiment 1 of the present disclosure;

FIG. 8 is a schematic diagram of a structure of a fourth calculating unit 602 of Embodiment 1 of the present disclosure;

FIG. 9 is a schematic diagram of obtaining the number of increased moving objects according to connected domains of Embodiment 1 of the present disclosure;

FIG. 10 is a schematic diagram of a structure of an acquiring unit 108 of Embodiment 1 of the present disclosure;

FIG. 11 is a flowchart of a method for acquiring linear regression coefficients and scaling parameters of Embodiment 1 of the present disclosure;

FIG. 12 is a schematic diagram of a structure of the electronic equipment of Embodiment 2 of the present disclosure;

FIG. 13 is a block diagram of a systematic structure of the electronic equipment of Embodiment 2 of the present disclosure; and

FIG. 14 is a flowchart of the counting method for moving objects of Embodiment 3 of the present disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. Various embodiments of the present disclosure shall be described below with reference to the accompanying drawings.

Embodiment 1

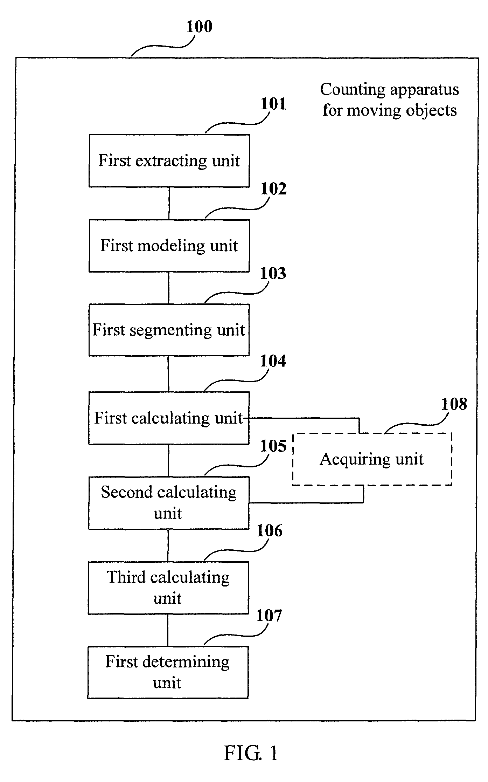

FIG. 1 is a schematic diagram of a structure of the counting apparatus for moving objects of Embodiment 1 of the present disclosure. As shown in FIG. 1, the apparatus 100 includes:

a first extracting unit 101 configured to extract images having moving objects;
a first modeling unit 102 configured to perform background modeling on extracted images, to obtain binarized images;

a first segmenting unit 103 configured to perform group segmentation on the binarized images;
a first calculating unit 104 configured to calculate features of each region after the group segmentation according to preobtained scaling parameters;
a second calculating unit 105 configured to calculate the number of moving objects in each region according to the features of each region and preobtained linear regression coefficients;
a third calculating unit 106 configured to calculate the number of increased moving objects in each region according to undirected graphs built based on optical flows; and
a first determining unit 107 configured to determine the number of moving objects in the images according to the number of moving objects and the number of increased moving objects in each region.

It can be seen from the above embodiment that by calculating the number of moving objects in each region based on linear regression, calculating the number of increased moving objects in each region according to the undirected graphs built based on optical flows, and counting according to the number of the moving objects and the number of the increased moving objects in each region, repeated counting may be avoided, and fast and accurate real-time counting may be achieved.

In this embodiment, the moving objects may any objects in moving states needing to be counted, such as vehicles running on the road, or walking people or animals, etc.

In this embodiment, the first extracting unit 101 may extract the images having moving objects from a surveillance video. In this embodiment, the surveillance video may be obtained by using an existing method, such as being obtained by a video camera mounted over a region needing to be monitored.

In this embodiment, the first extracting unit 101 may extract the images having moving objects from the surveillance video by using an existing method, such as extracting images with a unit of frame from the surveillance video, define a predetermined region in each frame of image, and extract images of the predetermined region.

In this embodiment, the predetermined region may be set according to an actual situation. For example, the predetermined region may be a region of interest (ROI).

In this embodiment, after the images having moving objects are extracted, the first modeling unit 102 performs background modeling on the extracted images, to obtain binarized images. In this embodiment, the binarized images may be obtained by using an existing background modeling method. For example, a Gaussian mixture model may be used to perform the background modeling.

In this embodiment, after the binarized images are obtained, the first segmenting unit 103 performs group segmentation on the binarized images. In this embodiment, an existing method may be used to perform group segmentation on the binarized images. A structure of the first segmenting unit 103 and a segmentation method shall be illustrated below.

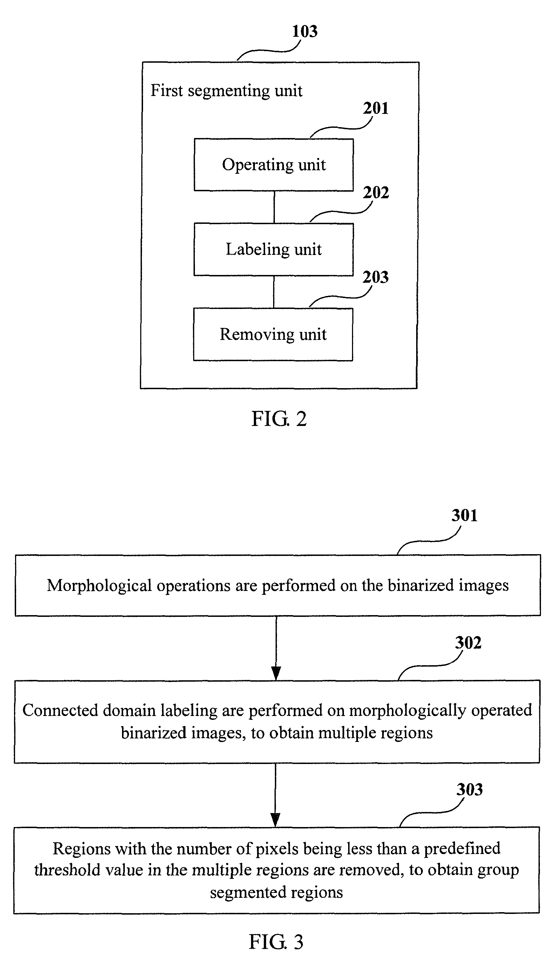

FIG. 2 is a schematic diagram of a structure of the first segmenting unit 103 of Embodiment 1 of the present disclosure. As shown in FIG. 2, the first segmenting unit 103 includes:

an operating unit 201 configured to perform morphological operations on the binarized images;
a labeling unit 202 configured to perform connected domain labeling on morphologically operated binarized images, to obtain multiple regions; and
a removing unit 203 configured to remove regions with the number of pixels being less than a predefined threshold value in the multiple regions, to obtain group segmented regions.

FIG. 3 is a flowchart of a method for performing group segmentation on the binarized images of Embodiment 1 of the present disclosure. As shown in FIG. 3, the method includes:

Step 301: morphological operations are performed on the binarized images;
Step 302: connected domain labeling are performed on morphologically operated binarized images, to obtain multiple regions; and
Step 303: regions with the number of pixels being less than a predefined threshold value in the multiple regions are removed, to obtain group segmented regions.

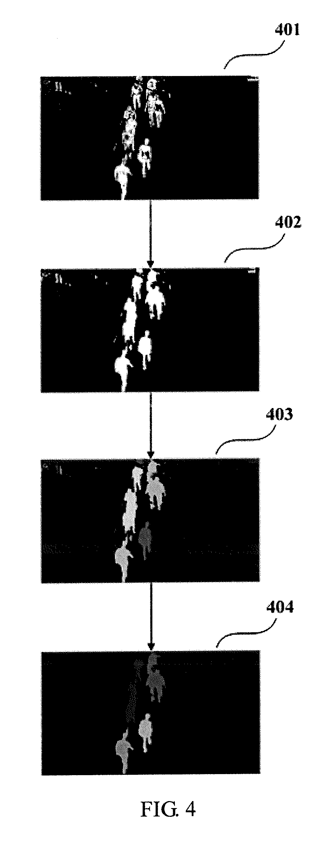

FIG. 4 is a schematic diagram of performing group segmentation on the binarized images of Embodiment 1 of the present disclosure. As shown in FIG. 4, 401 denotes an inputted binarized image, 402 denotes the morphologically operated binarized image, 403 denotes an image with connected domain being labelled, and 404 denotes an image with the regions with the number of pixels being less than the predefined threshold value being removed.

In this embodiment, the operating unit 201 may perform the morphological operations on the binarized images by using an existing method. For example, it first performs a "bridging" operation on unconnected pixels, then removes noises by a "close" operation, and finally fill holes in the binarized images, the holes being background pixels that cannot be reached by filling background from edges of the images.

In this embodiment, the labeling unit 202 may perform connected domain labeling by using an existing method. For example, it performs 8-connected-domain segmentation on the morphologically operated binarized images.

In this embodiment, the removing unit 203 removes the regions with the number of pixels being less than a predefined threshold value in the multiple regions, to remove regions that are impossible to be moving objects. In this embodiment, the predefined threshold value may be set according to an actual situation.

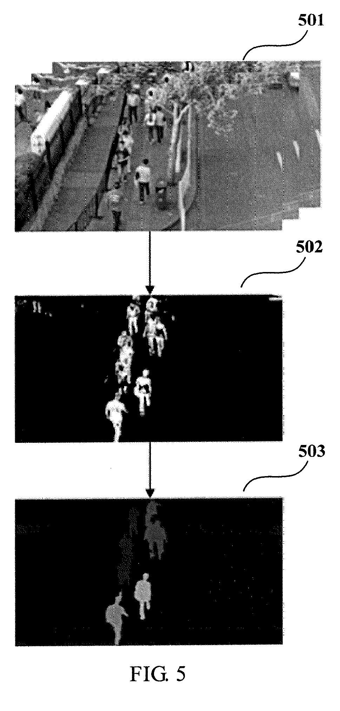

FIG. 5 is a schematic diagram of from extracting images to performing group segmentation on the images of Embodiment 1 of the present disclosure. As shown in FIG. 5, 501 denotes the extracted image having moving objects, 502 denotes the binarized image obtained after the background modelling is performed, and 503 denotes the binarized image after the group segmentation is performed.

In this embodiment, after the group segmented binarized images are obtained, the first calculating unit 104 calculates the features of each region after the group segmentation according to the preobtained scaling parameters. In this embodiment, an existing method may be used for calculating the features according to the scaling parameters. For example, the features may be calculated according to formula (1) below:

$$X_s = \frac{X - \mu}{\theta} \qquad (1);$$

where, $X_s$ denotes a feature vector with a scale being adjusted, X denotes a calculated feature vector of each region, and $\mu$ and $\theta$ denote the preobtained scaling parameters.

In this embodiment, the features of each region may include: at least one of an area of the region, a perimeter of the region, a ratio of the perimeter to the area of the region, histograms of edge orientations of the region, and a sum of edge pixels of the region.

In this embodiment, after the features of each region are obtained, the second calculating unit 105 calculates the number of the moving objects in each region according to the features of each region and the preobtained linear regression coefficients. In this embodiment, an existing method may be used for calculating the number of the moving objects. For example, the calculation may be performed according to formula (2) below:

$$l = round\left(\beta^T \left[1; X_s\right]\right) \qquad (2);$$

where, $l$ denotes the number of the moving objects, $X_s$ denotes the feature vector, $\beta$ denotes a preobtained linear regression coefficient, and a *round* function denotes a roundoff operation.

In this embodiment, after the number of the moving objects in all the regions are calculated one by one, the third calculating unit 106 calculates the number of increased moving objects in each region according to undirected graphs built based on optical flows. A structure of the third calculating unit 106 and a method for calculating the number of increased moving objects in each region shall be illustrated below.

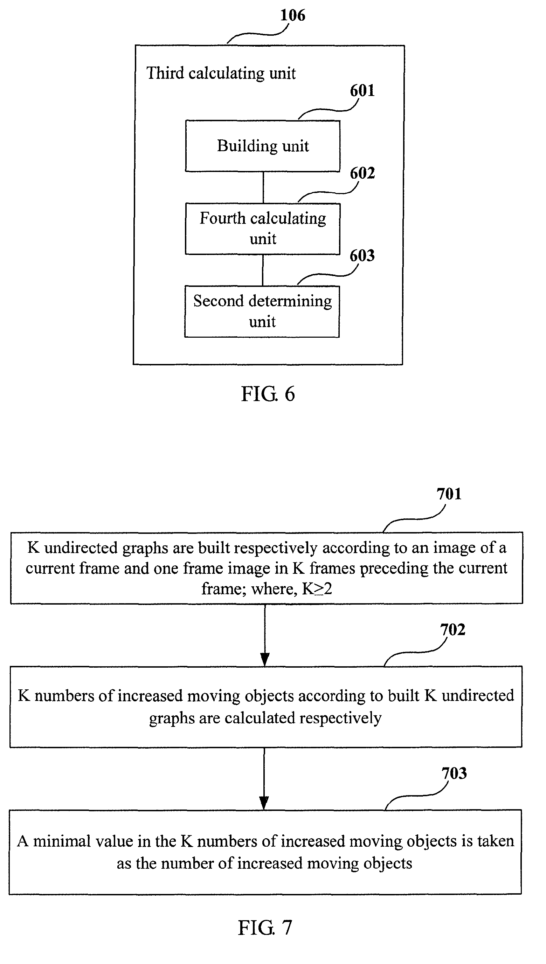

FIG. 6 is a schematic diagram of a structure of the third calculating unit 106 of Embodiment 1 of the present disclosure. As shown in FIG. 6, the third calculating unit 106 includes:

a building unit 601 configured to build K undirected graphs respectively according to an image of a current frame and one frame image in K frames preceding the current frame; where, K≥2;
a fourth calculating unit 602 configured to respectively calculate K numbers of increased moving objects according to built K undirected graphs; and
a second determining unit 603 configured to take a minimal value in the K numbers of increased moving objects as the number of increased moving objects.

FIG. 7 is a flowchart of a method for calculating the number of increased moving objects in each region of Embodiment 1 of the present disclosure. As shown in FIG. 7, the method includes:

Step 701: K undirected graphs are built respectively according to an image of a current frame and one frame image in K frames preceding the current frame; where, K≥2;
Step 702: K numbers of increased moving objects according to built K undirected graphs are calculated respectively; and
Step 703: a minimal value in the K numbers of increased moving objects is taken as the number of increased moving objects.

Thus, by taking the minimal value as the number of increased moving objects, the accuracy of the counting may further be improved.

In this embodiment, description shall be given taking that K=2 as an example.

In this embodiment, the building unit 601 may build the undirected graphs by using an existing method. For example, the undirected graphs may be built first according to images of a current frame and a former frame.

It is assumed that the image of the current frame includes n regions, annotated by $A_1$, $A_2$, ..., $A_n$, and the image of the former frame includes m regions, annotated by $B_1$, $B_2$, ..., $B_m$, both n and m being positive integers, then the undirected graphs have n+m vertexes.

A region to which the former frame corresponds, to which the region $A_i$ of the current frame moving at an optical flow V, may be calculated based on optical flows. For example, coordinates of the region to which the former frame corresponds, to which the region $A_i$ of the current frame moving at the optical flow $V$, may be calculated according to formula (3) below:

$$X\left(A_i{'}\right) = round\left(X\left(A_i\right) + V_x\left(A_i\right)\right)$$

$$Y\left(A_i{'}\right) = round\left(Y\left(A_i\right) + V_y\left(A_i\right)\right) \tag{3};$$

where, $X(A_i{'})$ and $Y(A_i{'})$ respectively denote the X coordinate and the Y coordinate of the region $A_i{'}$ to which the former frame corresponds, to which the region $A_1$ of the current frame moving at the optical flow $V$, $X(A_i)$ and $Y(A_i)$ respectively denote the X coordinate and the Y coordinate of the region $A_1$ of the current frame, $V_x$ and $V_y$ denote the X coordinate and the Y coordinate of a graph of an optical flow between the current frame and the former frame, and a *round* function denotes a roundoff operation, i=1-n.

Then overlapped pixels of regions $A_i{'}$ and $B_j$ are counted. For example, whether there exists an edge between vertexes $A_i$ and $B_j$ is judged by using formula (4) below:

$$E(A_i, B_j) = 1, \text{ if } \frac{N\left(P_{ij}\right)}{N\left(A_i{'}\right)} > \gamma \text{ or } \frac{N\left(P_{ij}\right)}{N\left(B_j\right)} > \gamma \tag{4};$$

where, a function $N$ denotes the number of the pixels, and a parameter $\gamma$ may be set according to an actual situation, such as being set to be 0.2.

An undirected graph between the current frame and a frame preceding the former frame may be built by using the same method. Similar to formula (3), the following formula (5) may be used to calculate coordinates of a region to which the frame preceding the former frame corresponds, to which the region $A_1$ of the current frame moving at the optical flow $V$:

$$X\left(A_i{''}\right) = round\left(X\left(A_i{'}\right) + V_x{'}\left(A_i{'}\right)\right)$$

$$Y\left(A_i{''}\right) = round\left(Y\left(A_i{'}\right) + V_y{'}\left(A_i{'}\right)\right) \tag{5};$$

where, $X(A_i{''})$ and $Y(A_i{''})$ respectively denote the X coordinate and the Y coordinate of the region $A_i{''}$ to which the frame preceding the former frame corresponds, to which the region $A_i{'}$ to which the former frame corresponds moving at the optical flow $V$, $X(A_i{'})$ and $Y(A_i{'})$ respectively denote the X coordinate and the Y coordinate of the region $A_i{'}$ to which the former frame corresponds, to which the region $A_i$ of the current frame moving at the optical flow $V$, $V_x{'}$ and $V_y{'}$ denote the X coordinate and the Y coordinate of a graph of an optical flow between the former frame and the frame preceding the former frame, and a *round* function denotes a roundoff operation, i=1-n.

After the undirected graph between the current frame and the former frame and the undirected graph between the current frame and the frame preceding the former frame are obtained, the fourth calculating unit 602 respectively calculates the numbers of the increased moving objects according to the built two undirected graphs.

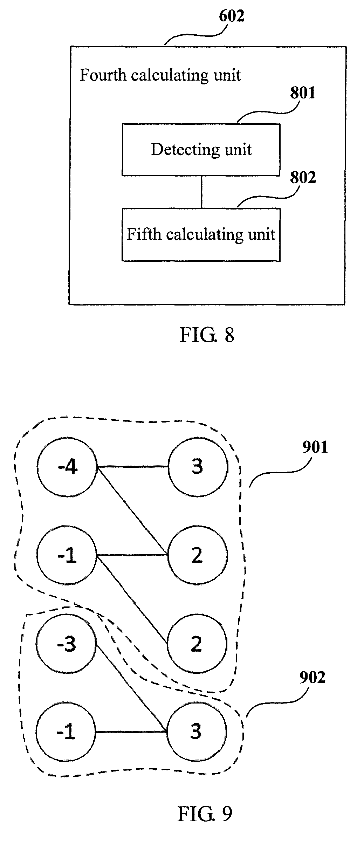

FIG. 8 is a schematic diagram of a structure of the fourth calculating unit 602 of Embodiment 1 of the present disclosure. As shown in FIG. 8, the fourth calculating unit 602 includes:

a detecting unit 801 configured to detect connected domains in each undirected graph of the K undirected graphs; and a fifth calculating unit 802 configured to respectively calculate a sum of the numbers of the moving objects in each connected domain, and add up the numbers of the moving objects in all the connected domains, to obtain the number of increased moving objects; wherein, the number of the moving objects in each region of the K frames preceding the current frame is set to be a negative number.

In this embodiment, the detecting unit 801 may detect the connected domains in the undirected graphs by using an existing method. After all the connected domains are detected, the number of the moving objects of the K frames preceding the current frame is set to be a negative number, and the sums of the numbers of the moving objects in all the connected domains are added together. For example, when a sum of the number of moving objects in a certain connected domain is a negative number, the value of the sum is set to be 0.

FIG. 9 is a schematic diagram of obtaining the number of increased moving objects according to connected domains of Embodiment 1 of the present disclosure. As shown in FIG. 9, the undirected graph between the current frame and the former frame includes two connected domains, i.e. a first connected domain 901 and a second connected domain 902. In the first connected domain 901, the numbers of the moving objects in each region of the current frame are 3, 2 and 2, respectively, and the numbers of the moving objects in each region of the former frame are 4 and 1, respectively, which are set to be negative numbers, that is, -4 and -1. And in the second connected domain 902, the numbers of the moving objects in each region of the current frame are 3, and the numbers of the moving objects in each region of the former frame are 3 and 1, respectively, which are set to be negative numbers, that is, -3 and -1. In this way, a sum of the numbers of the moving objects in the first connected domain 901 is 2, and a sum of the numbers of the moving objects in the second connected domain 902 is -1, which is set to be 0 as it is a negative number. Hence, a sum of the numbers of the moving objects in the first connected domain 901 and the second connected domain 902 is 2+0=2.

What described above is the number of the increased moving objects calculated based on the undirected graph between the current frame and the former frame, which is denoted by S1, and the number of the increased moving objects may be calculated by using the same method based on the undirected graph between the current frame and the frame preceding the former frame, which is denoted by S2. Hence, the second determining unit 602 takes the minimum value in S1 and S2 as the number of the increased moving objects.

The above is the illustrative description of K=2. When, K≥3, S3 (the number of the increased moving objects calculated based on the undirected graph between the current frame and the frame preceding the frame preceding the former frame) and more numbers of increased moving objects may be calculated by using similar methods, and a minimum value in these values is taken as the number of the increased moving objects.

In this embodiment, after the third calculating unit 106 calculates the number of the increased moving objects in each region, the first determining unit 107 determines the number of moving objects in the images according to the number of moving objects and the number of increased moving objects in each region. For example, the number of moving objects in the images is obtained by adding up the number of moving objects and the number of increased moving objects in each region.

In this embodiment, the scaling parameters and the linear regression coefficient may be preobtained. A method for obtaining the scaling parameters and the linear regression coefficient shall be illustrated below.

In this embodiment, the apparatus 100 may further include: an acquiring unit 108 configured to obtain the linear regression coefficients and the scaling parameters. In this embodiment, the acquiring unit 108 is optional, which is shown in FIG. 1 by a dashed box. And the acquiring unit 108 may also not be provided in the apparatus 100.

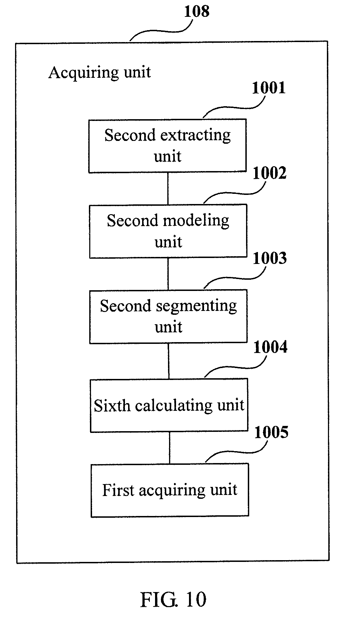

FIG. 10 is a schematic diagram of a structure of the acquiring unit 108 of Embodiment 1 of the present disclosure. As shown in FIG. 10, the acquiring unit 108 includes:

a second extracting unit 1001 configured to extract images used for training;
a second modeling unit 1002 configured to perform background modeling on extracted images, to obtain binarized images;
a second segmenting unit 1003 configured to perform group segmentation on the binarized images;
a sixth calculating unit 1004 configured to calculate features of each region after the group segmentation; and
a first acquiring unit 1005 configured to train a linear learning model according to the features of each region, to obtain the linear regression coefficients and the scaling parameters.

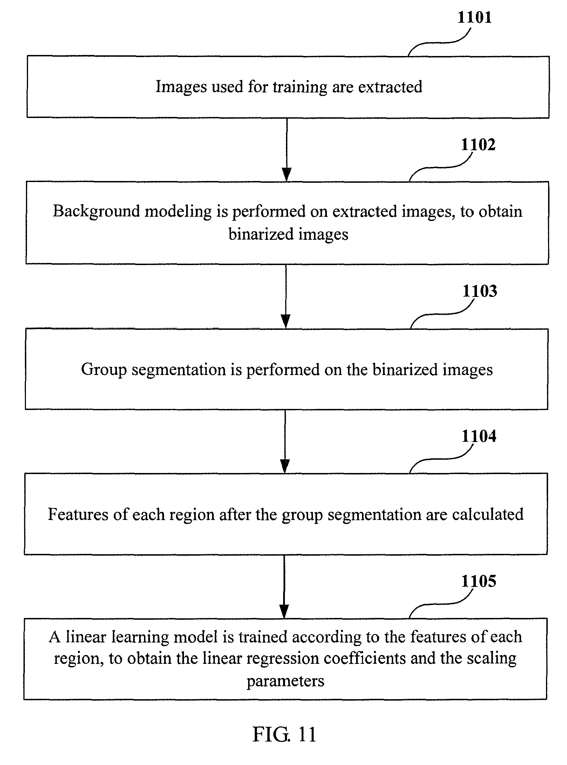

FIG. 11 is a flowchart of a method for acquiring the linear regression coefficients and the scaling parameters of Embodiment 1 of the present disclosure. As shown in FIG. 11, the method includes:

Step 1101: images used for training are extracted;
Step 1102: background modeling is performed on extracted images, to obtain binarized images;

Step 1103: group segmentation is performed on the binarized images;

Step 1104: features of each region after the group segmentation are calculated; and

Step 1105: a linear learning model is trained according to the features of each region, to obtain the linear regression coefficients and the scaling parameters.

In this embodiment, a structure and functions of the second extracting unit 1001 are identical to those of the first extracting unit 101, and shall not be described herein any further. In this embodiment, the images used for training may be selected according to an actual situation. For example, images of less than 5000 frames may be selected for training.

In this embodiment, structures and functions of the second modeling unit 1002 and the second segmenting unit 1003 are identical to those of the first modeling unit 102 and the first segmenting unit 103, and shall not be described herein any further.

In this embodiment, the sixth calculating unit 1004 may calculate the features by using an existing method, and before calculating the features, influence of perspective beforehand may be taken into account, and weighted values of the features may be calculated by using an existing method. In this embodiment, for region-based features, the weighted values may be directly used for each pixel, and for edge-based features, square roots of the weighted values may be used.

In this embodiment, the features of each region may include: at least one of an area of the region, a perimeter of the region, a ratio of the perimeter to the area of the region, histograms of edge orientations of the region, and a sum of edge pixels of the region.

In this embodiment, after the features of each region are obtained, the first acquiring unit 1005 trains the linear learning model according to the features of each region, to obtain the linear regression coefficients and the scaling parameters. In this embodiment, an existing method may be used for training. For example, feature data for training may be divided into two parts, one for training of the learning model, and the other for cross-validation.

First, each feature is subtracted by a mean value of all the features, then obtained feature value is divided by its respective standard deviation. In this embodiment, vectors $\mu$ and $\theta$ are respectively used to denote the mean value and standard deviation of all the features, i.e. the preobtained scaling parameters in this embodiment.

At this moment, a learning feature set $X_{ts}$ and a cross-validation feature set $X_{cs}$ with adjusted scales may be calculated by using formula (6) below:

$$X_{ts} = \frac{X_t - \mu}{\theta}$$

$$X_{cs} = \frac{X_c - \mu}{\theta} \tag{6};$$

where, $X_{ts}$ and $X_{cs}$ denote the learning feature set and the cross-validation feature set with adjusted scales, and $X_t$ and $X_c$ denote the learning feature set and the cross-validation feature set.

In this embodiment, the linear regression may be used as a machine learning method. For example, a cost function may be expressed by formula (7) below:

$$J(\beta) = \frac{1}{2N}\left(\sum_{i=1}^{N}\left(\beta^T * \left[1; X_{ts}^{(i)}\right] - y_t^{(i)}\right)^2\right) + \frac{\lambda}{2N}\left(\sum_{j=1}^{m}\beta_j^2\right) \tag{7};$$

*where, m* is the number of features, which is 16 in this embodiment, *N* is a training number, such as an integer greater than or equal to 1000, $\beta = [\beta_0\ \beta_1\ \beta_2 \ ... \ \beta_m]^T$ denote the linear regression coefficients, which are annotated as parameters needing to be learnt by the model, $X_{ts}^{(i)}$ denotes a feature vector of an *i-th* training sample, $y_t^{(i)}$ denotes the number of annotated moving objects of the i-th training sample, and $\lambda$ denotes an adjustment parameter.

In this embodiment, the adjustment parameter may be set to be 0, 0.01, 0.03, 0.1, 0.3, 1, 3, 10, 30 and 100, and a model is trained and $\beta$ is calculated for each adjustment parameter value. Then, a mean square difference (MSD) of the cross-validation feature set may be calculated by using the trained $\beta$ according to formula (8) below:

$$MSD = \frac{1}{M} \sum_{i=1}^{M} \left( \beta^T \left[ 1; X_{cs}^{(i)} \right] - y_c^{(i)} \right)^2 \qquad (8);$$

where, *MSD* denotes the mean square difference of the cross-validation feature set, M denotes a cross-validation number, such as an integer greater than or equal to 500, β denotes linear regression coefficients, $X_{cs}^{(i)}$ denotes a feature vector of an *i-th* cross-validation sample with adjusted scales, and $y_c^{(i)}$ denotes the number of moving objects of the *i-th* cross-validation sample.

In this embodiment, corresponding β when the *MSD* is minimal are selected as preobtained linear regression coefficients.

Hence, with the method illustrated above, the linear regression coefficients β and the scaling parameters μ and θ are obtained.

It can be seen from the above embodiment that by calculating the number of moving objects in each region based on linear regression, calculating the number of increased moving objects in each region according to the undirected graphs built based on optical flows, and counting according to the number of the moving objects and the number of the increased moving objects in each region, repeated counting may be avoided, and fast and accurate real-time counting may be achieved.

Embodiment 2

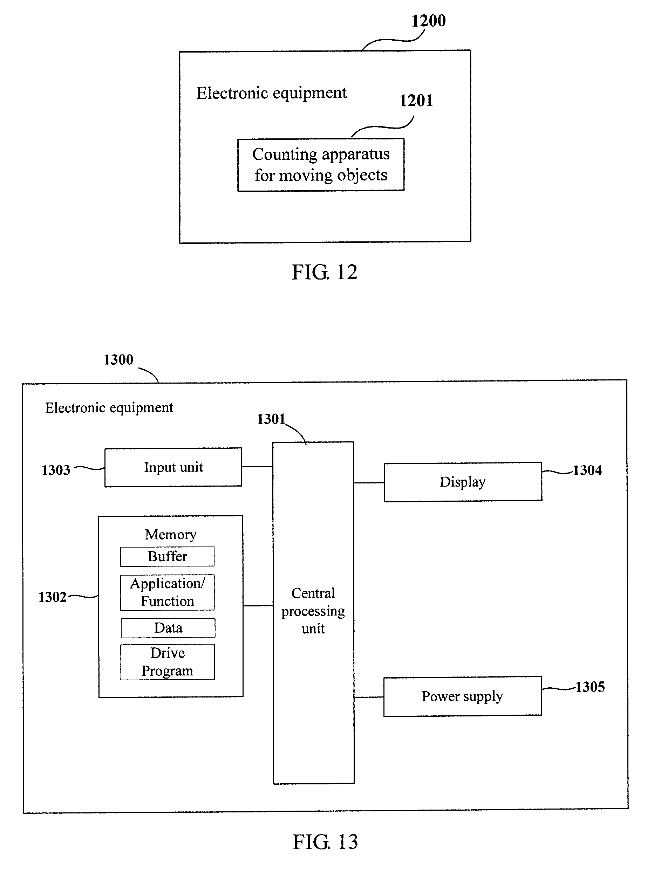

An embodiment of the present disclosure further provides electronic equipment. FIG. 12 is a schematic diagram of a structure of the electronic equipment of Embodiment 2 of the present disclosure. As shown in FIG. 12, the electronic equipment 1200 includes a counting apparatus 1201 for moving objects. In this embodiment, a structure and functions of the counting apparatus for moving objects are identical to those contained in Embodiment 1, and shall not be described herein any further.

FIG. 13 is a block diagram of a systematic structure of the electronic equipment of Embodiment 2 of the present disclosure. As shown in FIG. 13, the electronic equipment 1300 may include a central processing unit 1301 and a memory 1302, the memory 1302 being coupled to the central processing unit 1301. This figure is illustrative only, and other types of structures may also be used, to supplement or replace this structure and achieve telecommunications function or other functions.

As shown in FIG. 13, the electronic equipment 1300 may further include an input unit 1303, a display 1304, and a power supply 1305.

In an implementation, the functions of the counting apparatus for moving objects described in Embodiment 1 may be integrated into the central processing unit 1301. For example, the central processing unit 1301 may be configured to: extract images having moving objects; perform background modeling on extracted images, to obtain binarized images; perform group segmentation on the binarized images; calculate features of each region after the group segmentation according to preobtained scaling parameters; calculate the number of moving objects in each region according to the features of each region and preobtained linear regression coefficients; calculate the number of increased moving objects in each region according to undirected graphs built based on optical flows; and determine the number of moving objects in the images according to the number of moving objects and the number of increased moving objects in each region.

For example, the calculating the number of increased moving objects in each region according to undirected graphs built based on optical flows includes: building K undirected graphs respectively according to an image of a current frame and one frame image in K frames preceding the current frame; where, K≥2; respectively calculating K numbers of increased moving objects according to built K undirected graphs; and taking a minimal value in the K numbers of increased moving objects as the number of increased moving objects.

For example, the central processing unit 1301 may further be configured to: obtain the linear regression coefficients and the scaling parameters, the obtaining the linear regression coefficients including: extracting images used for training; performing background modeling on the extracted images, so as to obtain binarized images; performing group segmentation on the binarized images; calculating features of each region after the group segmentation; and training a linear learning model according to the features of each region, to obtain the linear regression coefficients and the scaling parameters.

For example, the performing group segmentation on the binarized images includes: performing morphological operations on the binarized images; performing connected domain labeling on morphologically operated binarized images, to obtain multiple regions; and removing regions with the number of pixels being less than a predefined threshold value in the multiple regions, to obtain group segmented regions.

For example, the features of each region include: at least one of an area of the region, a perimeter of the region, a ratio of the perimeter to the area of the region, histograms of edge orientations of the region, and a sum of edge pixels of the region.

In another implementation, the counting apparatus for moving objects described in Embodiment 1 and the central processing unit 1301 may be configured separately. For example, the counting apparatus for moving objects may be configured as a chip connected to the central processing unit 1301, with its functions being realized under control of the central processing unit 1301.

In this embodiment, the electronic equipment 1300 does not necessarily include all the parts shown in FIG. 13.

As shown in FIG. 13, the central processing unit 1301 is sometimes referred to as a controller or control, and may include a microprocessor or other processor devices and/or logic devices. The central processing unit 1301 receives input and controls operations of every components of the electronic equipment 1300.

The memory 1302 may be, for example, one or more of a buffer memory, a flash memory, a hard drive, a mobile medium, a volatile memory, a nonvolatile memory, or other suitable devices, which may store programs executing related information. And the central processing unit 1301 may execute the programs stored in the memory 1302, so as to realize information storage or processing, etc. Functions of other parts are similar to those of the prior art, which shall not be described herein any further. The parts of the electronic equipment 1300 may be realized by specific hardware, firmware, software, or any combination thereof, without departing from the scope of the present disclosure.

It can be seen from the above embodiment that by calculating the number of moving objects in each region based on linear regression, calculating the number of increased moving objects in each region according to the undirected graphs built based on optical flows, and counting according to the number of the moving objects and the number of the increased moving objects in each region, repeated counting may be avoided, and fast and accurate real-time counting may be achieved.

Embodiment 3

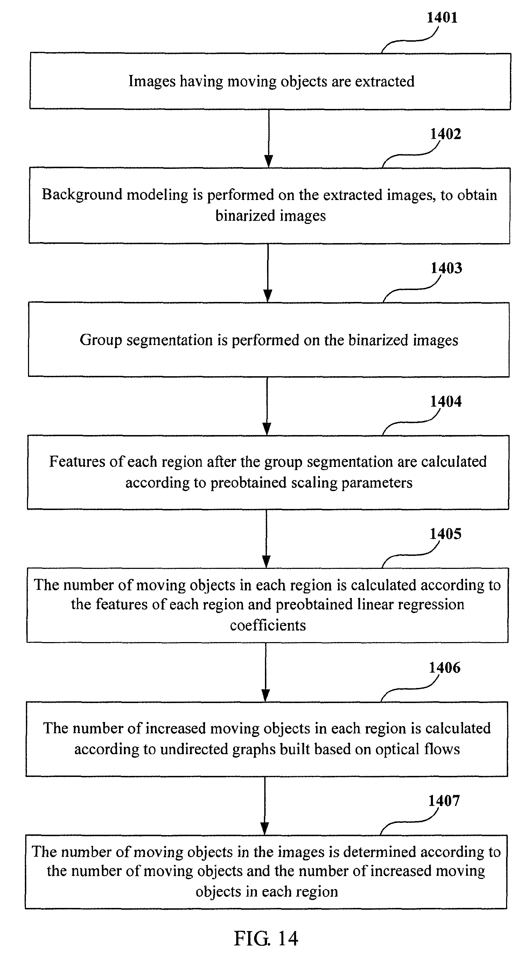

An embodiment of the present disclosure further provides a counting method for moving objects, corresponding to the counting apparatus for moving objects. FIG. 14 is a flowchart of the counting method for moving objects of Embodiment 3 of the present disclosure. As shown in FIG. 14, the method includes:

Step 1401: images having moving objects are extracted;
Step 1402: background modeling is performed on the extracted images, to obtain binarized images;
Step 1403: group segmentation is performed on the binarized images;
Step 1404: features of each region after the group segmentation are calculated according to preobtained scaling parameters;
Step 1405: the number of moving objects in each region is calculated according to the features of each region and preobtained linear regression coefficients;
Step 1406: the number of increased moving objects in each region is calculated according to undirected graphs built based on optical flows; and
Step 1407: the number of moving objects in the images is determined according to the number of moving objects and the number of increased moving objects in each region.

In this embodiment, a method for extracting images, a method for background modeling, a method for group segmentation, a method for calculating features, a method for calculating the number of moving objects, a method for calculating the number of increased moving objects and a method for determining the number of moving objects are identical to those described in Embodiment 1, and shall not be described herein any further.

It can be seen from the above embodiment that by calculating the number of moving objects in each region based on linear regression, calculating the number of increased moving objects in each region according to the undirected graphs built based on optical flows, and counting according to the number of the moving objects and the number of the increased moving objects in each region, repeated counting may be avoided, and fast and accurate real-time counting may be achieved.

An embodiment of the present disclosure provides a computer-readable program, when the program is executed in a counting apparatus for moving objects or electronic equipment, the program enables the computer to carry out the counting method for moving objects as described in Embodiment 3 in the counting apparatus for moving objects or the electronic equipment.

An embodiment of the present disclosure further provides a storage medium in which a computer-readable program is stored, the computer-readable program enables the computer to carry out the counting method for moving objects as described in Embodiment 3 in a counting apparatus for moving objects or electronic equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

**Claims**

1. A counting apparatus for moving objects, comprising:

   a first extracting unit configured to extract images having moving objects;
   a first modeling unit configured to perform background modeling on extracted images, to obtain binarized images;
   a first segmenting unit configured to perform group segmentation on the binarized images;
   a first calculating unit configured to calculate features of each region after the group segmentation according to preobtained scaling parameters;
   a second calculating unit configured to calculate the number of moving objects in each region according to the features of each region and preobtained linear regression coefficients;
   a third calculating unit configured to calculate the number of increased moving objects in each region according to undirected graphs built based on optical flows; and
   a first determining unit configured to determine the number of moving objects in the images according to the number of moving objects and the number of increased moving objects in each region.

2. The apparatus according to claim 1, wherein the third calculating unit comprises:

   a building unit configured to build K undirected graphs respectively according to an image of a current frame and one frame image in K frames preceding the current frame; where, $K \geq 2$;
   a fourth calculating unit configured to respectively calculate K numbers of increased moving objects according to built K undirected graphs; and
   a second determining unit configured to take a minimal value in the K numbers of increased moving objects as the number of increased moving objects.

3. The apparatus according to claim 2, wherein the fourth calculating unit comprises:

   a detecting unit configured to detect connected domains in each undirected graph of the K undirected graphs; and
   a fifth calculating unit configured to respectively calculate a sum of the numbers of the moving objects in each connected domain, and add up the numbers of the moving objects in all the connected domains, to obtain the number of increased moving objects; wherein, the number of the moving objects in each region of the K frames preceding the current frame is set to be a negative number.

4. The apparatus according to claim 1, wherein the apparatus further comprises:

   an acquiring unit configured to obtain the linear regression coefficients and the scaling parameters;
   the acquiring unit comprising:

      a second extracting unit configured to extract images used for training;
      a second modeling unit configured to perform background modeling on extracted images, to obtain binarized images;
      a second segmenting unit configured to perform group segmentation on the binarized images;
      a sixth calculating unit configured to calculate features of each region after the group segmentation; and
      a first acquiring unit configured to train a linear learning model according to the features of each region, to obtain the linear regression coefficients and the scaling parameters.

5. The apparatus according to claim 1, wherein the first segmenting unit or the second segmenting unit comprises:

an operating unit configured to perform morphological operations on the binarized images;
a labeling unit configured to perform connected domain labeling on morphologically operated binarized images, to obtain multiple regions; and
a removing unit configured to remove regions with the number of pixels being less than a predefined threshold value in the multiple regions, to obtain group segmented regions.

6. The apparatus according to claim 1, wherein the features of each region comprise:

at least one of an area of the region, a perimeter of the region, a ratio of the perimeter to the area of the region, histograms of edge orientations of the region, and a sum of edge pixels of the region.

7. A counting method for moving objects, comprising:

extracting images having moving objects;
performing background modeling on extracted images, to obtain binarized images;
performing group segmentation on the binarized images;
calculating features of each region after the group segmentation according to preobtained scaling parameters;
calculating the number of moving objects in each region according to the features of each region and preobtained linear regression coefficients;
calculating the number of increased moving objects in each region according to undirected graphs built based on optical flows; and
determining the number of moving objects in the images according to the number of moving objects and the number of increased moving objects in each region.

8. The method according to claim 7, wherein the calculating the number of increased moving objects in each region according to undirected graphs built based on optical flows comprises:

building K undirected graphs respectively according to an image of a current frame and one frame image in K frames preceding the current frame; where, $K \geq 2$;
calculating respectively K numbers of increased moving objects according to built K undirected graphs; and
taking a minimal value in the K numbers of increased moving objects as the number of increased moving objects.

9. The method according to claim 8, wherein the calculating respectively numbers of increased K moving objects according to the built K undirected graphs comprises:

detecting connected domains in each undirected graph of the K undirected graphs; and
calculating respectively a sum of the numbers of the moving objects in each connected domain, and add up the numbers of the moving objects in all the connected domains, to obtain the number of increased moving objects; wherein, the number of the moving objects in each region of the K frames preceding the current frame is set to be a negative number.

10. The method according to claim 7, wherein the method further comprise:

obtaining the linear regression coefficients and the scaling parameters;
the obtaining the linear regression coefficients and the scaling parameters comprising:

extracting images used for training;
performing background modeling on the extracted images, to obtain binarized images;
performing group segmentation on the binarized images;
calculating features of each region after the group segmentation; and
training a linear learning model according to the features of each region, to obtain the linear regression coefficients and the scaling parameters.

11. The method according to claim 7, wherein the performing group segmentation on the binarized images includes:

performing morphological operations on the binarized images;

performing connected domain labeling on morphologically operated binarized images, to obtain multiple regions; and

removing regions with the number of pixels being less than a predefined threshold value in the multiple regions, to obtain group segmented regions.

12. The method according to claim 7, wherein the features of each region include:

at least one of an area of the region, a perimeter of the region, a ratio of the perimeter to the area of the region, histograms of edge orientations of the region, and a sum of edge pixels of the region.

**100**

Counting apparatus
for moving objects

**101**

First extracting unit

**102**

First modeling unit

**103**

First segmenting unit

**104**

First calculating unit

**108**

Acquiring unit

**105**

Second calculating
unit

**106**

Third calculating
unit

**107**

First determining
unit

FIG. 1

**103**

First segmenting unit

**201**

Operating unit

**202**

Labeling unit

**203**

Removing unit

FIG. 2

**301**

Morphological operations are performed on the binarized images

**302**

Connected domain labeling are performed on morphologically operated binarized images, to obtain multiple regions

**303**

Regions with the number of pixels being less than a predefined threshold value in the multiple regions are removed, to obtain group segmented regions

FIG. 3

FIG. 4

501

502

503

FIG. 5

**106**

Third calculating unit

**601**

Building unit

**602**

Fourth calculating
unit

**603**

Second determining
unit

FIG. 6

**701**

K undirected graphs are built respectively according to an image of a current frame and one frame image in K frames preceding the current frame; where, K≥2

**702**

K numbers of increased moving objects according to built K undirected graphs are calculated respectively

**703**

A minimal value in the K numbers of increased moving objects is taken as the number of increased moving objects

FIG. 7

FIG. 8

FIG. 9

**108**

Acquiring unit

**1001**

Second extracting
unit

**1002**

Second modeling
unit

**1003**

Second segmenting
unit

**1004**

Sixth calculating unit

**1005**

First acquiring unit

FIG. 10

1101

Images used for training are extracted

1102

Background modeling is performed on extracted images, to obtain binarized images

1103

Group segmentation is performed on the binarized images

1104

Features of each region after the group segmentation are calculated

1105

A linear learning model is trained according to the features of each region, to obtain the linear regression coefficients and the scaling parameters

FIG. 11

**1200**

Electronic equipment

**1201**

Counting apparatus for moving objects

FIG. 12

**1300**

Electronic equipment

**1301**

1303 — Input unit

Display — 1304

1302 —
Memory
Buffer
Application/ Function
Data
Drive Program

Central processing unit

Power supply — 1305

FIG. 13

```
                                                          1401
┌──────────────────────────────────────────────────────┐
│         Images having moving objects are extracted     │
└──────────────────────────────────────────────────────┘

                                                          1402
┌──────────────────────────────────────────────────────┐
│  Background modeling is performed on the extracted     │
│  images, to obtain binarized images                    │
└──────────────────────────────────────────────────────┘

                                                          1403
┌──────────────────────────────────────────────────────┐
│    Group segmentation is performed on the binarized    │
│                      images                            │
└──────────────────────────────────────────────────────┘

                                                          1404
┌──────────────────────────────────────────────────────┐
│  Features of each region after the group segmentation  │
│  are calculated according to preobtained scaling       │
│  parameters                                            │
└──────────────────────────────────────────────────────┘

                                                          1405
┌──────────────────────────────────────────────────────┐
│  The number of moving objects in each region is        │
│  calculated according to the features of each region   │
│  and preobtained linear regression coefficients        │
└──────────────────────────────────────────────────────┘

                                                          1406
┌──────────────────────────────────────────────────────┐
│  The number of increased moving objects in each region │
│  is calculated according to undirected graphs built    │
│  based on optical flows                                │
└──────────────────────────────────────────────────────┘

                                                          1407
┌──────────────────────────────────────────────────────┐
│  The number of moving objects in the images is         │
│  determined according to the number of moving objects  │
│  and the number of increased moving objects in each    │
│  region                                                │
└──────────────────────────────────────────────────────┘
```

FIG. 14

Europäisches
Patentamt

European
Patent Office

Office européen
des brevets

# EUROPEAN SEARCH REPORT

**Application Number**

EP 16 19 1378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DAVID RYAN ET AL: "Crowd Counting Using Multiple Local Features", DIGITAL IMAGE COMPUTING: TECHNIQUES AND APPLICATIONS, 2009. DICTA '09, IEEE, PISCATAWAY, NJ, USA, 1 December 2009 (2009-12-01), pages 81-88, XP031613846, ISBN: 978-1-4244-5297-2 * abstract * * Section III. * | 1-12 | INV. G06T7/254 G06K9/00 |
| Y | WO 2012/173465 A1 (MIMOS BERHAD [MY]; LIANG KIM MENG [MY]; TANG SZE LING [MY]; ZULAIKHA K) 20 December 2012 (2012-12-20) * abstract * * paragraph [0001] - paragraph [0003] * * paragraph [0021] - paragraph [0025] * | 1-12 | |
| Y | US 2012/308123 A1 (JO YOUNG-GWAN [KR] ET AL) 6 December 2012 (2012-12-06) * abstract * * figure 3 * * paragraph [0007] - paragraph [0011] * * paragraph [0050] - paragraph [0053] * | 1-12 | |

-/--

**TECHNICAL FIELDS SEARCHED (IPC)**

G06T
G06K

The present search report has been drawn up for all claims

| Place of search | Date of completion of the search | Examiner |
|---|---|---|
| Munich | 1 March 2017 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 16 19 1378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | O Masoud ET AL: "A novel method for tracking and counting pedestrians in real-time using a single camera", IEEE Transactions on Vehicular Technology, 1 January 2001 (2001-01-01), pages 1267-1278, XP055349859, New York DOI: 10.1109/25.950328 Retrieved from the Internet: URL:http://ieeexplore.ieee.org/ielx5/25/20559/00950328.pdf?tp=&arnumber=950328&isnumber=20559 * abstract * * Sections I., II. * * figures 1,3,4 * | 1-12 | |
| A | DENMAN ET AL: "An adaptive optical flow technique for person tracking systems", PATTERN RECOGNITION LETTERS, ELSEVIER, AMSTERDAM, NL, vol. 28, no. 10, 15 July 2007 (2007-07-15), pages 1232-1239, XP022069309, ISSN: 0167-8655, DOI: 10.1016/J.PATREC.2007.02.008 * abstract * * Sections 1., 2., 3. * | 1-12 | |

TECHNICAL FIELDS
SEARCHED (IPC)

The present search report has been drawn up for all claims

| Place of search | Date of completion of the search | Examiner |
|---|---|---|
| Munich | 1 March 2017 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 1378

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2017

| Patent document cited in search report | | Publication date | Patent family member(s) | | Publication date |
|---|---|---|---|---|---|
| WO 2012173465 | A1 | 20-12-2012 | NONE | | |
| US 2012308123 | A1 | 06-12-2012 | KR 20120133646 | A | 11-12-2012 |
| | | | US 2012308123 | A1 | 06-12-2012 |

EPO FORM P0459

For more details about this annex : see Official Journal of the European Patent Office, No. 12/82